# EUROPEAN PATENT APPLICATION

(11) **EP 4 442 423 A2**
(43) Date of publication of application: **09.10.2024**
(21) Application number: 24163122.5
(22) Date of filing: 13.03.2024
(51) Int. Cl.: B29B 17/04, B09B 3/40, C10B 53/07, B29K 105/10, B29L 31/08

(54) **APPARATUS AND METHOD FOR RECOVERING CARBON FIBERS AND GLASS FIBERS FROM COMPOSITE MATERIAL**

(30) Priority: 05.04.2023 KR 20230044781
(71) Applicant: Doosan Enerbility Co., Ltd., Seongsan-gu Changwon-si, Gyeongsangnam-do 51711 (KR)
(72) Inventor: CHO, Sung Jin, Gimhae-si, Gyeongsangnam-do (KR)
(74) Representative: Ter Meer Steinmeister & Partner

(57) **Abstract**

Proposed are an apparatus and a method for recovering carbon fibers and glass fibers from a composite material. The apparatus includes a preprocessing unit, a first reaction unit, a second reaction unit, and a separation unit. Waste blades are continuously transferred to each unit by a conveyor. The waste blades can be subjected to shredding, rolling, primary pyrolysis, secondary pyrolysis, and separation of carbon fibers and glass fibers in a single process.

## Description

The present application claims priority to Korean Patent Application No. 10-2023-0044781, filed April 5, 2023.

### BACKGROUND OF THE INVENTION

### Field of the Invention

The present disclosure relates to an apparatus and a method for recovering carbon fibers and glass fibers from a composite material.

### Description of the Related Art

Wind power generation is a power generation method that converts kinetic energy of the wind into mechanical energy for rotating blades, and converts the mechanical energy into electrical energy. The use of wind power generation is increasing as an alternative to existing power generation methods that mainly use fossil fuels.

A wind power generator generally has a plurality of blades mounted on a rotating shaft of the generator. To produce more electrical energy, the blades are made long and wide. As the size of the blades increases, the weight of the blades increases. However, the blades have to be made as light as possible for energy efficiency. In addition, since the blades continuously collide with the wind, the strength of the blades have to be improved to ensure durability. In order to solve the above problem, carbon fiber reinforced plastic or glass fiber reinforced plastic is used as the material of the blades. Composite materials containing carbon fibers and glass fibers are light in weight yet high in strength, so they are used in a variety of fields other than blades, including automobiles, space, aviation, and defense.

However, after the blades of the wind power generator are damaged or reach the end of their life, disposal of waste blades becomes a problem. In general, composite materials such as carbon fiber reinforced plastic or glass fiber reinforced plastic are difficult to recycle and are most often disposed of in a landfill. However, it is impossible to continue landfilling the increasing amount of composite material waste, so the need for disposal methods other than landfill or recycling methods for such composite material waste continues to emerge.

Accordingly, there is a need to develop an apparatus and method that can recover carbon fibers or glass fibers from used waste blades.

The foregoing is intended merely to aid in the understanding of the background of the present disclosure, and is not intended to mean that the present disclosure falls within the purview of the related art that is already known to those skilled in the art.

### SUMMARY OF THE INVENTION

Accordingly, the present disclosure has been made keeping in mind the above problems occurring in the related art, and an objective of the present disclosure is to provide a recovery apparatus and a recovery method for separating carbon fibers or glass fibers from a composite material.

Another objective of the present disclosure is to provide an apparatus and a method for recovering carbon fibers and glass fibers from a composite material, the apparatus and the method being capable of separately recovering carbon fibers and glass fibers from waste composite materials discarded in waste blade, aerospace, and defense fields, and the like in a single process.

An apparatus for recovering carbon fibers and glass fibers from a composite material according to one aspect of the present disclosure includes a preprocessing unit, a first reaction unit, a second reaction unit, and a separation unit. The preprocessing unit include a shredding module configured for shredding waste blades and a rolling module configured for rolling the shredded waste blades. The first reaction unit is configured to receive and subject the preprocessed shredded waste blades to primary pyrolysis. The second reaction unit is configured to subject the shredded waste blades that have been subjected to the primary pyrolysis to secondary pyrolysis. The separation unit may be configured to receive a resultant material of the secondary pyrolysis from the second reaction unit. The separation unit includes a separation portion configured for separating a resultant material of the secondary pyrolysis into a first material and a second material, a first chamber for accommodating and/or containing the first material, and a second chamber for accommodating and/or containing the second material.

The apparatus for recovering carbon fibers and glass fibers from a composite material according to any one of these aspects may include one or more of the following features:
The apparatus for recovering carbon fibers and glass fibers from the composite material may further include: a cutting unit for cutting the waste blades to a predetermined length, e.g. before the waste blade is provided to the preprocessing unit.

The apparatus for recovering carbon fibers and glass fibers from the composite material may further include a plurality of conveyors including a first conveyor and a second conveyor. The first conveyor may be configured to transfer the preprocessed shredded waste blades from the preprocessing unit to the first reaction unit. The second conveyor may be configured to transfer the resultant material of the secondary pyrolysis from the second reaction unit to the separation unit.

The apparatus for recovering carbon fibers and glass fibers from the composite material may further include: a temperature control unit for controlling a temperature inside at least one of the preprocessing unit, the first reaction unit, and the second reaction unit.

In the apparatus for recovering carbon fibers and glass fibers from the composite material, the shredding module may include a suction portion sucking in dust within the shredding module.

In the apparatus for recovering carbon fibers and glass fibers from the composite material, the preprocessing unit may include a screening module between the shredding module and the rolling module.

In the apparatus for recovering carbon fibers and glass fibers from the composite material, an input portion of the rolling module may include a first input portion and a second input portion.

In the apparatus for recovering carbon fibers and glass fibers from the composite material, nitrogen may be supplied when the second input portion is opened. That is, the apparatus for recovering carbon fibers and glass fibers from the composite material may be configured to supply when the second input portion is opened.

In the apparatus for recovering carbon fibers and glass fibers from the composite material, gas exhausted from an inside of the rolling module may be recirculated into the rolling module. That is, the apparatus for recovering carbon fibers and glass fibers from the composite material may be configured to exhaust gas from an inside of the rolling module may be recirculated into the rolling module.

In the apparatus for recovering carbon fibers and glass fibers from the composite material, a temperature inside the first reaction unit may be controlled to be 400°C to 500°C. That is, the temperature control unit may be configured to control a temperature inside the first reaction unit to be 400°C to 500°C.

In the apparatus for recovering carbon fibers and glass fibers from the composite material, an oxygen concentration in the first reaction unit may be controlled to be equal to or less than 10%.

In the apparatus for recovering carbon fibers and glass fibers from the composite material, an oil vapor generated in the first reaction unit may be controlled to be cooled in the temperature control unit and extracted as oil.

In the apparatus for recovering carbon fibers and glass fibers from the composite material, the second reaction unit may include a sensor measuring an oxygen concentration in the second reaction unit, and/or an external air tank supplying external air to the second reaction unit.

A method for recovering carbon fibers and glass fibers from a composite material, performed by an automatic system, according to another aspect of the present disclosure includes: a shredding step of shredding waste blades cut in a lengthwise direction; an inputting step of continuously inputting the shredded waste blades into a rolling module; a rolling step of rolling the shredded waste blades in the rolling module; a primary pyrolysis step of subjecting the rolled shredded waste blades to primary pyrolysis; a secondary pyrolysis step of subjecting the shredded blades that have been subjected to the primary pyrolysis to secondary pyrolysis; and separating a resultant material of the second pyrolysis step. Temperatures in the rolling step, the primary pyrolysis step, and the secondary pyrolysis step may be controlled by a temperature control unit.

The method for recovering carbon fibers and glass fibers from a composite material may include one or more of the following features:

The method for recovering carbon fibers and glass fibers from a composite material according to any one of the herein described aspects and embodiments may be performed by the apparatus for recovering carbon fibers and glass fibers from a composite material according to any one of the herein described aspects and embodiments.

The apparatus for recovering carbon fibers and glass fibers from a composite material according to any one of the herein described aspects and embodiments may be configured to perform a method for recovering carbon fibers and glass fibers from a composite material according to any one of the herein described aspects and embodiments.

In the method for recovering carbon fibers and glass fibers from the composite material, in the shredding step of shredding the waste blades, dust in a shredding module may be sucked in by a suction portion.

The method for recovering carbon fibers and glass fibers from the composite material may further include: screening the shredded waste blades after the shredding step of shredding the waste blades.

In the method for recovering carbon fibers and glass fibers from the composite material, an input portion of the rolling module may include a first input portion and a second input portion. In the inputting step of continuously inputting the shredded waste blades into the rolling module, the first input portion and the second input portion may be opened sequentially.

In the method for recovering carbon fibers and glass fibers from the composite material, in the rolling step of rolling the shredded waste blades, exhaust gas exhausted from the rolling module may be recirculated into the rolling module.

In the method for recovering carbon fibers and glass fibers from the composite material, a temperature in the first pyrolysis step may be controlled to be 400°C to 500°C.

In the method for recovering carbon fibers and glass fibers from the composite material, an oxygen concentration in the first pyrolysis step may be controlled to be equal to or less than 10%.

In the method for recovering carbon fibers and glass fibers from the composite material, oil vapor generated in the first pyrolysis step may be controlled to be cooled and extracted as oil.

In the method for recovering carbon fibers and glass fibers from the composite material, nitrogen may be supplied when the second input portion is opened.

According to the embodiment of the present disclosure, carbon fibers or glass fibers can be effectively separated from a composite material.

According to the embodiment of the present disclosure, carbon fibers and glass fibers can be separately recovered from waste blades in a single process.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a block diagram schematically illustrating an apparatus for recovering carbon fibers and glass fibers from a composite material according to an embodiment of the present disclosure;
FIG. 2 is a diagram illustrating a preprocessing unit in the apparatus for recovering carbon fibers and glass fibers from the composite material according to the embodiment of the present disclosure;
FIG. 3 is a diagram illustrating a separation unit in the apparatus for recovering carbon fibers and glass fibers from the composite material according to the embodiment of the present disclosure; and
FIG. 4 is a flowchart illustrating a method for recovering carbon fibers and glass fibers from a composite material according to an embodiment of the present disclosure.

### DETAILED DESCRIPTION OF THE INVENTION

Reference will now be made in detail to various embodiments of the present disclosure, specific examples of which are illustrated in the accompanying drawings and described below, since the embodiments of the present disclosure can be variously modified in many different forms. However, the present disclosure should not be construed as being limited to only the embodiments set forth herein, but should be construed as covering modifications, equivalents, or alternatives falling within the scope of the present disclosure.

The terminology used herein is for the purpose of describing particular embodiments only and is not intended to be limiting. As used herein, the singular forms are intended to include the plural forms as well, unless the context clearly indicates otherwise. It will be further understood that the terms "comprise", "include", "have", etc. when used in this specification, specify the presence of stated features, integers, steps, operations, elements, components, and/or combinations thereof but do not preclude the presence or addition of one or more other features, integers, steps, operations, elements, components, and/or combinations thereof.

Hereinafter, exemplary embodiments of the present disclosure will be described in detail with reference to the accompanying drawings. Throughout the drawings, the same reference numerals will refer to the same or like elements or parts. Further, it is to be noted that, when the functions of conventional elements and the detailed description of elements related with the present disclosure may make the gist of the present disclosure unclear, a detailed description of those elements may be omitted. For the same reason, some components will be exaggerated, omitted, or schematically illustrated in the accompanying drawings.

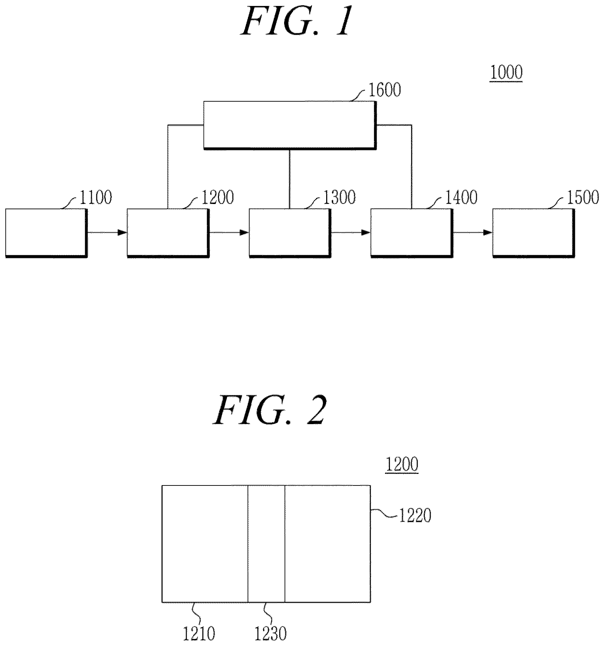

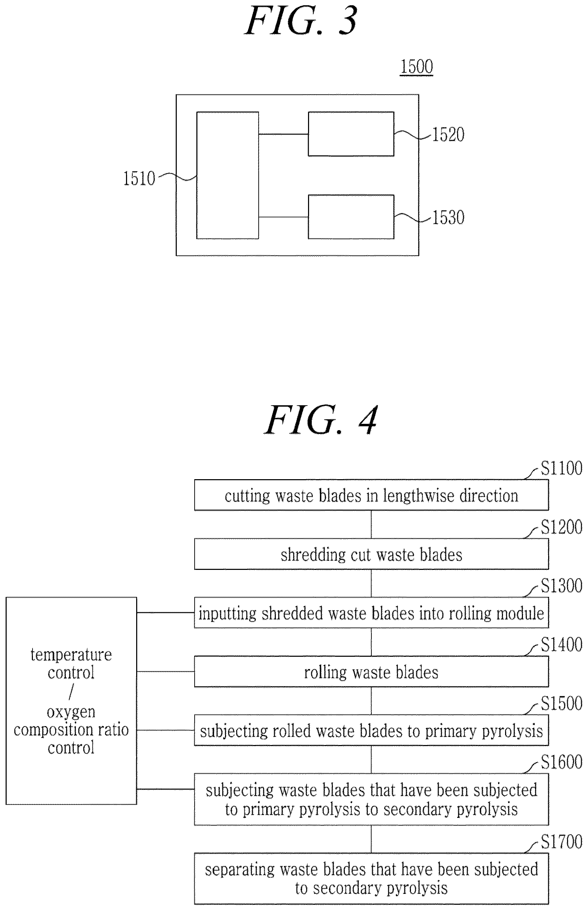

FIG. 1 is a block diagram schematically illustrating an apparatus 1000 for recovering carbon fibers and glass fibers from a composite material according to an embodiment of the present disclosure; FIG. 2 is a diagram illustrating a preprocessing unit 1200 in the apparatus 1000 for recovering carbon fibers and glass fibers from the composite material according to the embodiment of the present disclosure; and FIG. 3 is a diagram illustrating a separation unit 1500 in the apparatus 1000 for recovering carbon fibers and glass fibers from the composite material according to the embodiment of the present disclosure.

As illustrated in FIG. 1, the apparatus 1000 according to the present disclosure includes a cutting unit 1100, the preprocessing unit 1200, a first reaction unit 1300, a second reaction unit 1400, the separation unit 1500, and a temperature control unit 1600.

The cutting unit 1100 are configured to receive and cut collected waste blades into pieces of a predetermined size. The waste blades may be blades of a wind power generator. The material of the waste blades may be composite materials, such as carbon fiber reinforced plastic or glass fiber reinforced plastic, containing carbon fiber or glass fiber. The waste blades may be long, reaching up to 50 m in length, so it is not easy to input them into a shredder. Therefore, the waste blades are cut into several cut pieces so that each cut pieces of the waste blades may have a shorter maximum length. This ensures smooth input into the shredder afterward. For smooth loading and unloading, the waste blades may be cut to a predetermined length of equal to or less than 10 m.

The cutting unit 1100 may include any type of saws to cut the waste blades into pieces. The cutting unit 1100 may include any one or more of a wire saw, a circular saw, band saw, table saw, miter saw, jigsaw, reciprocating saw, chop saw, scroll saw, panel saw, concrete saw, radial arm saw, tile saw, and chain saw.

The cutting unit may be configured to receive the waste blades moved from a collection location of the waste blades where the waste blades are collected. According to an embodiment, the cutting unit may be installed in a collection location of the waste blades and configued to cut the waste blades directly at the collection location to facilitate movement. After being cut, the pieces of the waste blades are moved to the preprocessing unit 1200 by a conveyor.

According to an embodiment, the apparatus 1000 may include multiple conveyors. The conveyors may be installed continuously. One or more conveyors may be installed to partially overlap each other. The multiple conveyors are installed to connect each of the units and modules in the apparatus 1000. The waste blade, during the entire operation of the apparatus 1000, may be automatically transferred from one unit to another by one or more of the multiple conveyors.

For example, the cutting unit 1100 and the preprocessing unit 1200 may be connected by a conveyor. The cut pieces of the waste blades, after produced by the cutting unit 1100, may be automatically moved by a conveyor of the conveyor system from the cutting unit 1100 to the preprocessing unit 1200.

Afterward, the cut pieces of the waste blades are shredded and rolled in the preprocessing unit 1200. As illustrated in FIG. 2, the preprocessing unit 1200 includes a shredding module 1210, a rolling module 1220, and a screening module 1230.

The shredding module 1210 may include any type of industrial shredders. For example, the shredding module 1210 may include one or more of a single shaft shredder, a dual shaft shredder, a four-shaft shredder, a vertical shredder, and a metal shredder.

The cut pieces of waste blades are input into the shredding module 1210 and shredded into smaller pieces having with small particle sizes. According to an embodiment, the pieces of the waste blades are shredded into particles having thickness of equal to or less than 20 mm.

During the shredding process of the waste blades, a large amount of dust may be generated. To prevent dust from leaking out of the shredding module 1210, an input portion of the shredding module 1210 may be sealed. Also, a positive pressure hood may be provided at the top of the shredding module 1210. Exhaust gas may be introduced into the shredding module 1210 through the positive pressure hood. The exhaust gas introduced into the shredding module 1210 may enhance the shredding of the waste blades in the shredding module 1210. The exhaust gas may be supplied from a temperature control unit, which will be described later.

In addition, the shredding module 1210 may be provided with a dust suction portion to remove dust generated within the shredding module 1210 during the waste blades' shredding process. The dust suction portion may suck in the dust within the shredding module 1210 and collect it in a predetermined space. The shredding module 1210 may continuously circulate air within the shredding module 1210 to collect the dust.

Afterward, the shredded waste blades produced by the shredding module 1210 are transferred to the rolling module 1220 for rolling. A conveyor of the multiple conveyors may be used to transfer the shredded waste blades from the shredding module 1210 to the rolling module 1220.

Meanwhile, the shredded waste blades shredded in the shredding module 1210 may be screened by the screening module 1230 before being input into the rolling module 1220. The shredded waste blades may be referred to as waste blade particles. Through the screening by the screening module 1230, waste blade particles with a particle size of equal to or greater than 5 mm may be transferred to the rolling module 1220.

The shredded waste blades may have different particle sizes. When the waste blades with different particle sizes are mixed and are pyrolyzed in a first reaction unit together, waste blade particles with smaller particle sizes may be carbonized quickly and may contaminate a resultant material of primary pyrolysis. Therefore, according to an embodiment of the present disclosure, the shredded waste blade particles may be filtered on a screen by the screening module 1230, and particles with equal to or less than a predetermined size may be separated through the screening. The screening module 1230 may apply vibration to facilitate separation of small particles.

According to an embodiment, the screening module 1230 may include a screen having a mesh. The mesh size of the screen may be 5 mm. By screening, waste blade particles with a particle size of equal to or greater than 5 mm may be transferred to the rolling module 1220. Waste blade particles with a particle size of equal to or smaller than 5 mm may be separated by the screening. Dust collected by suction in the shredding module 1210 and separated small waste blade particles may be transferred from the preprocessor unit 1200 to a separate combustion line and pyrolyzed. The waste blade particles retained by the screening module 1230 after the screening, having larger particle size then the mesh size of the screen, may be referred to as screened shredded waste blades or screened waste blade particles.

After the screening, the screened shredded waste blades are moved to the rolling module 1220. According to an embodiment, the screened shredded waste blades are continuously inputted in a predetermined amount into the rolling module 1220. The shredded waste blades waste blade particles referred to in the operations of the rolling module 1220 and operations thereafter mean the screened shredded waste blades.

Even after passing through the screen, the particle size of the shredded waste blades is not uniform, so it is challenging to input them in a fixed amount consistently. The present disclosure adopts a semi-batch type feeder to input a fixed amount of shredded waste blades.

Specifically, according to an embodiment, to input a fixed amount of shredded waste blades into the rolling module 1220, an input portion of the rolling module 1220 may have a dual cover structure. That is, the input portion of the rolling module 1220 may include a first input portion having a first gate and a second input portion having a second gate. According to an embodiment, the input portion of the rolling module 1220 may have more than two input portions. The first input portion and the second input portion may be controlled to be not opened simultaneously, but may be controlled to be opened sequentially. The gates of the first input portion and the second input portion may be opened in a sliding manner. The opening ratio of the gates of the first and second input portions may be adjusted depending on the amount to be input. According to an embodiment, a plurality of three or more gates may be provided on an inlet side (i.e., input portion) of the rolling module 1220.

Each gate of the first and second input portions may be moved within a predetermined range by a gate valve. The gates may be controlled to be open/close individually. As the plurality of gates are opened individually, a desired amount of shredded waste blades may be input into the rolling module 1220. In addition, by this semi-batch method, the waste blades may be continuously input into the rolling module 1220, and the rolled waste blades are continuously supplied to the first reaction unit 1300. Also, the input amount of the waste blades may be controlled to be consistent.

In addition, according to the present disclosure, due to the dual structure of the input portion of the rolling module 1220, oxygen inflow may be minimized when the shredded waste blades are input into the rolling module 1220. Specifically, the first input portion of the rolling module 1220 may be opened while the second input portion is closed. After the first input portion is opened and a predetermined amount of waste blades is input, when the first input portion is closed and the rolling module 1220 is sealed, the second input portion is opened. At this moment, the rolling module 1220 performs Nitrogen purging simultaneously with the opening of the second input portion. Nitrogen is supplied into the rolling module 1220 while the second input portion is opened, and the supply of nitrogen is stopped when the second input portion is closed again. By the opening of the second input portion, the waste blades are input into a rolling chamber of the rolling module 1220. Due to the dual sealing structure and nitrogen supply, oxygen inflow into the rolling module 1220 is minimized.

The inside of the chamber of the rolling module 1220 may be maintained in a reducing atmosphere. This is because when the oxygen concentration is high, there is a possibility of fire. One or more oxygen measurement sensors may be provided inside the rolling module 1220. The oxygen concentration inside the rolling module 1220 is continuously measured. The oxygen concentration inside the rolling module 1220 is controlled to be less than 10%.

To maintain the reducing atmosphere (i.e., an environment having less oxygen), the rolling module 1220 recirculates exhaust gas exhausted from the inside of the chamber of the rolling module 1220 into the rolling module 1220. The exhaust gas includes nitrogen, carbon dioxide, and the like. According to an embodiment, the rolling module 1220 may purge more nitrogen to reduce the ratio of the oxygen in the chamber of the rolling module 1220.

The rolling module 1220 includes a plurality of rollers and the shredded waste blades introduced into the rolling module 1220 are rolled by a plurality of rollers. During the course of rolling the rolling module 1220 allows the particle size of the shredded waste blades to become smaller. This facilitates a better pyrolysis reaction which will be performed in the first reaction unit 1300 and the second reaction unit 1400. After the rolling in the rolling module 1220, the rolled shredded waste blades are continuously supplied to the first reaction unit 1300.

The rolling module 1220 may maintain the chamber of the rolling module at a predetermined temperature. For example, the temperature inside the rolling module 1220 may be maintained at room temperature, and thus moisture within the rolling module 1220 is removed. To this end, the rolling module 1220 may include temperature sensors to detect the temperature of the inside of the chamber of the rolling module 1220.

Afterward, the rolled shredded waste blades are transferred to the first reaction unit 1300 by a conveyor. The rolled shredded waste blades are subjected to primary pyrolysis in the first reaction unit 1300. To continuously pyrolyze the waste blades, the first reaction unit 1300 may continuously receive the rolled waste blades from the rolling module 1220.

The apparatus 1000 includes a burner to generate hot air. The burner may use pyrolysis gas or natural gas to generate hot air.

The temperature control unit 1600 supplies the hot air (high-temperature hot air) into the first reaction unit 1300. The temperature control unit 1600 detects the temperature inside the first reaction unit 1300 by a temperature sensor and maintain the temperature inside the first reaction unit 1300 to be 400°C to 500°C by controlling supply of the hot air.

According to an embodiment, the first reaction unit 1300 may include a rotary kiln firing furnace to apply heat evenly to the rolled waste blades. The rotary kiln may have a cylindrical rotary furnace with an incline. When reactants are continuously input into an inlet located at a first end of the kiln, a resultant reaction material is discharged through an outlet located at a second end of the kiln. The waste blades are input into an inlet located at a first side of the first reaction unit 1300. The shredded waste blades contained in the rotary kiln are pyrolyzed by hot air flowing therein. Then, primary pyrolysis reactants are continuously discharged from an outlet located at a second side of the rotary kiln. As the shredded waste blades are rotated and moved toward an outlet side, heat is applied evenly. In this embodiment, the rotary kiln method is used, but the present disclosure is not limited thereto, and various types of furnaces, such as a screw type, may be used.

The oxygen concentration in the first reaction unit 1300 is maintained at equal to or less than 10%. To this end, a sensor may be provided inside the first reaction unit 1300 to continuously measure the oxygen concentration. In another embodiment, a sensor may be provided in an exhaust line to measure the oxygen concentration in exhaust gas.

The first reaction unit 1300 controls the residence time of the shredded waste blades in the first reaction unit 1300 to be equal to or less than 9 hours. When the residence time is greater than 9 hours, reactants may be excessively carbonized and economic efficiency may be reduced.

During the operation of the first reaction unit 1300, resin such as epoxy and wood contained in the waste blades are gasified, and carbon fiber and glass fiber mass remains. Here, the resin that has not yet been gasified may be carbonized (char), remaining on the surfaces of carbon fibers and glass fibers.

As a resultant material of the primary pyrolysis process, oil vapor may be generated in addition to gas and char. The oil vapor may be cooled while passing through a cooler of the temperature control unit 1600 and extracted partly as gas and partly as oil. The oil vapor may be cooled by water. The gas extracted from the oil vapor has a calorific value and may flow into a gas tank of the temperature control unit 1600 and be used as a heat source for indirect heating.

In addition, a portion of exhaust gas discharged from the first reaction unit 1300 may be supplied to the rolling module 1220. Therefore, the oxygen concentration in the rolling module 1220 may be lowered, and the temperature inside the rolling module 1220 may be increased.

A portion of char remaining on the surfaces of the carbon fibers and glass fibers may be removed by screening. The apparatus 1000 may include a char separation screen module. A resultant material discharged from the first reaction unit 1300 may be screened by the char separation screen module before being transferred to the second reaction unit 1400. By the screening, the char in the resultant material discharged from the first reaction unit 1300 are at least partially separated from the carbon fibers and the glass fibers. As a screen for separating the char, the char separation screen module may include a screen having a mesh diameter of equal to or less than 50 mm may be used.

Then, the carbon fiber and glass fiber mass from which the char has been partially removed is moved to the second reaction unit 1400. In this step, the carbon fibers and the glass fibers may still have char remaining between the fibers. In the second reaction unit 1400, this remaining char is further removed so that only the carbon fibers and the glass fibers remain.

The carbon fiber and glass fiber mass containing the remaining char is provided to and subjected to secondary pyrolysis in the second reaction unit 1400. For the secondary pyrolysis, high temperature gas and superheated water vapor are supplied to the second reaction unit 1400. The temperature control unit 1600 supplies the hot air generated by the burner to the second reaction unit 1400 and maintains the temperature inside the second reaction unit 1400 to be 400°C to 500°C. By the secondary pyrolysis in the second reaction unit 1400, the resin and char remaining in the carbon fiber and glass fiber mass are decomposed.

The second reaction unit 1400 controls the residence time of the carbon fiber and glass fiber mass in the second reaction unit 1400 to be equal to or less than 3 hours.

When the oxygen concentration in the second reaction unit 1400 is high, there is a risk of oxidizing the object to be heated. Therefore, the oxygen concentration needs to be maintained at equal to or less than 10%. The oxygen concentration in the second reaction unit 1400 is controlled by an external air tank and a chimney, which will be described later.

Specifically, the second reaction unit 1400 may further include an external air tank and a chimney. The external air tank supplies external air to the second reaction unit 1400. The chimney supplies at least a portion of combustion gas discharged from the first reaction unit 1300 to the second reaction unit 1400. The external air tank and the chimney mix 70 to 80% of combustion gas with 20 to 30% of external air to control the oxygen concentration to be equal to or less than 10%. To this end, a plurality of sensors are installed in the second reaction unit 1400 and the second reaction unit 1400 continuously sense the oxygen concentration using the plurality of sensors. When the oxygen concentration exceeds 15%, the mixing ratio of the combustion gas may be increased to lower the oxygen concentration; conversely, when the oxygen concentration is less than 7%, the mixing ratio of the external air may be heightened to lower the oxygen concentration. In this embodiment, the sensors are provided in the second reaction unit 1400, but in another embodiment, a sensor may be provided in the exhaust line of the second reaction unit 1400 to measure the oxygen concentration in exhaust gas from the second reaction unit 1400.

After the secondary pyrolysis in the second reaction unit 1400, high purity carbon fibers and glass fibers can be obtained.

In this embodiment, the first reaction unit 1300 and the second reaction unit 1400 are described as having separate chambers. However, the present disclosure is not limited thereto. According to an embodiment, the first and secondary pyrolysis processes may be performed in one chamber. In this case, a control logic may be set so that a primary pyrolysis is first performed in the chamber, and after its completion, a resultant material may be screened. Then, the screened resultant material is subjected to the secondary pyrolysis in the chamber.

A heat source for the primary pyrolysis and the secondary pyrolysis may be pyrolysis gas and natural gas.

Referring to FIG. 3, the separation unit 1500 may include a separation portion 1510, a first chamber 1520, and a second chamber 1530. The separation portion 1510 receives a resultant material from the second reaction unit 1400 transferred via conveyor and separates the resultant material into r-CF (recycled carbon fibers) and r-GF (recycled glass fibers). The separation portion 1510 may separate the r-CF and the r-GF using density difference.

Methods that the separation portion 1510 uses to separate the carbon fibers and the glass fibers based on density difference include a dry method and a wet method. When employing the dry method, the separation portion 1510 activate an air flow to propel the light carbon fibers through the resultant material resulting from the secondary pyrolysis, which is moving on a conveyor. By the activated air flow, a relatively lighter material between the carbon fibers and the glass fibers is separated from the other. In the wet method, separation of the carbon fibers and the glass fibers is achieved using a liquid with a density that falls between those of the carbon fibers and the glass fibers (the separation liquid). In other words, the separation portion 1510 put the resultant of the second activation unit 1400 into such liquid, allowing the carbon fibers and the glass fivers to be separated by the liquid, then collects the separately.

The separation portion 1510 may be in a form of a mechanical machinery having a fan to blow an air and a conveyor. The form of the mechanical machinery of the separation portion 1510 may include a liquid container which can contain the separation liquid and a conveyor.

The carbon fibers and the glass fibers separated and collected by the separation portion 1510 may be moved to the first chamber 1520 and the second chamber 1530, respectively. The separation of the carbon fibers and the glass fibers may be performed on a conveyor.

The temperature control unit 1600 controls the temperature and oxygen concentration in the preprocessing unit 1200, the first reaction unit 1300, and the second reaction unit 1400. The temperature control unit 1600 may include a chimney, a gas tank, and a cooler.

The gas tank may supply pyrolysis gas and natural gas as a heat source for heating the first reaction unit 1300 and the second reaction unit 1400. The chimney discharges combustion gas discharged from the first reaction unit 1300 and the second reaction unit 1400 to the outside of the apparatus. In addition, the chimney supplies at least a portion of the combustion gas discharged from the first reaction unit 1300 to the second reaction unit 1400 to transfer the heat of the first reaction unit 1300 to the second reaction unit 1400, and controls the oxygen concentration in the second reaction unit 1400.

As a resultant material of the primary pyrolysis process, oil vapor may be generated. The oil vapor may flow to the cooler of the temperature control unit 1600 and may be cooled. During the cooling, the oil vapor may be extracted partly in the form of pyrolysis gas and partly in the form of liquid oil. Then, liquid oil is extracted, and the remaining pyrolysis gas may be supplied to the first reaction unit 1300 and the second reaction unit 1400 through the gas tank.

The apparatus 1000 may include a controller to activate, operate and control the functions of each of units and modules of the apparatus 1000, described throughout this specification.

According to the present disclosure, the waste blades are subjected to shredding, pyrolysis, and separation of carbon fibers and glass fibers in a single process, and are moved to each unit by a conveyor. One or more conveyors may be linked to control the residence time in each unit.

According to the present disclosure, all and every operation of the units, modules, and components of the apparatus 1000 may be performed automatically without an human intervention. In other words, from the first operation of the cutting unit 1100 for receiving and cutting of the waste blades to the last operation of the separation unit 1500 for separating and collecting the recycled carbon fibers and the recycled glass fibers, all the operations may be performed automatically without any human intervention.

FIG. 4 is a flowchart illustrating a method for recovering carbon fibers and glass fibers from a composite material such as waste blades according to an embodiment of the present disclosure. The method may be performed by the apparatus 1000 described above. The method may include at least or all of the operations of the apparatus 1000 described above.

In step S 1100, collected waste blades are cut in the lengthwise direction (S 1100). The collected waste blades may be cut into pieces having a maximum length of equal to or less than 10 m. Cutting of the waste blades may be performed by the cutting unit 1100 using a wire saw or the like. The cut waste blades may be easily moved and input into a shredder. The cut waste blades are moved by a conveyor.

Next, in step S1200, the waste blades cut in the lengthwise direction are shredded. The waste blades are input into a shredding module 1210 and shredded. The waste blades may be shredded by the shredding module 1210 into particles having a thickness equal to or less than 20 mm. During the process of the shredding a large amount of dust may be generated. To prevent dust from leaking out of the shredding module 1210, an input portion of the shredding module 1210 may be sealed. In addition, a dust suction portion may suck in dust generated during the shredding process of the waste blades and collect it in a predetermined space. Air may be continuously circulated within the shredding module 1210 to collect dust.

After shredding the waste blades, the shredded waste blades (i.e., the waste blade particles) are screened to remove small particles smaller than a predetermined particle size. The shredded waste blades have different particle sizes. When the waste blades with different particle sizes are mixed and pyrolyzed in a first reaction unit together, waste blade particles with even smaller particle sizes may be carbonized quickly and may contaminate a resultant material of primary pyrolysis. Therefore, the waste blades particles may be moved to the screening module 1230, and particles with equal to or less than a predetermined size may be separated through the screening. Vibration may be applied to the screening module 1230 to facilitate separation of small particles.

In step S1300, the shredded waste blades are continuously inputted in a predetermined amount into a rolling module 1220. The particle size of the shredded waste blades is not uniform, so it is challenging to input them in a fixed amount consistently. A semi-batch type feeder is adopted to input a fixed amount of shredded waste blades.

Specifically, to input a fixed amount of shredded waste blades into the rolling module 1220, an input portion of the rolling module 1220 may have a dual cover structure. That is, the input portion of the rolling module 1220 may include a first input portion having a first gate and a second input portion having a second gate. The first input portion and the second input portion are controlled to be not opened simultaneously, but are controlled to be opened sequentially. The gates of the first input portion and the second input portion may be opened in a sliding manner. The opening ratio of the gates of the first and second input portions may be adjusted depending on the amount to be input. In addition, nitrogen purging is performed simultaneously with the opening of the second input portion. Nitrogen is supplied into the rolling module 1220 while the second input portion is opened, and the supply of nitrogen is stopped when the second input portion is closed again. Therefore, oxygen inflow into the rolling module 1220 is minimized.

In step S1400, the shredded waste blades are rolled. The shredded waste blades introduced into the rolling module 1220 are rolled by a plurality of rollers. In order to facilitate a pyrolysis reaction, the pieces of waste blades have to be less than a predetermined size. By the rolling, the particle size of the shredded waste blades becomes smaller.

The inside of the chamber of the rolling module 1220 may be maintained in a reducing atmosphere (i.e., an environment having less oxygen). To maintain the reducing atmosphere, exhaust gas exhausted from the inside of the chamber of the rolling module 1220 may be recirculated into the rolling module 1220. The oxygen concentration inside the rolling module 1220 is continuously measured, and the oxygen concentration inside the rolling module 1220 is controlled to be less than 10%.

In step S1500, the rolled shredded waste blades are subjected to primary pyrolysis. A temperature control unit 1600 may supply heated gas inside a first reaction unit 1300. A heat source of a burner that generates heated gas, that is, hot air, may be pyrolysis gas or natural gas. The temperature inside the first reaction unit 1300 may be 400°C to 500°C. The temperature in the primary pyrolysis process is controlled by the temperature control unit 1600.

A rotary kiln firing furnace may be used in the first reaction unit 1300 so that heat is evenly applied to the rolled waste blades. During the primary pyrolysis, the oxygen concentration in the first reaction unit 1300 may be maintained at equal to or less than 10%. The residence time of the shredded waste blades in the first reaction unit 1300 may be equal to or less than 9 hours.

In the first reaction unit 1300, resin such as epoxy and wood contained in the waste blades are gasified, and carbon fiber and glass fiber mass remains. Here, the resin that has not yet been gasified is carbonized (char) and remains on the surfaces of carbon fibers and glass fibers. As a resultant material of the primary pyrolysis process, oil vapor is generated in addition to gas and char. The oil vapor may be cooled and extracted partly as gas and partly as oil. The oil vapor may be cooled by water. The gas extracted from the oil vapor has a calorific value and may flow into a gas tank of the temperature control unit 1600 and be used as a heat source for indirect heating. A resultant material of the primary pyrolysis process may be screened before secondary pyrolysis.

In step S1600, shredded waste blades that have been subjected to the first pyrolysis are subjected to secondary pyrolysis. The carbon fiber and glass fiber mass containing the char is subjected to secondary pyrolysis in a second reaction unit 1400. For the secondary pyrolysis, high temperature gas and superheated water vapor are supplied to the second reaction unit 1400. A heat source of a burner that generates hot air may be pyrolysis gas or natural gas. The temperature inside the second reaction unit 1400 may be 400°C to 500°C. The temperature in the secondary pyrolysis process is controlled by the temperature control unit 1600. By the secondary pyrolysis, the resin and char remaining in the carbon fiber and glass fiber mass are decomposed.

The residence time of the carbon fiber and glass fiber mass in the second reaction unit 1400 may be equal to or less than 3 hours. Here, when the oxygen concentration in the second reaction unit 1400 is high, oxidation of an object to be heated may occur, so the oxygen concentration is maintained at equal to or less than 10%.

During the secondary pyrolysis, the oxygen concentration in the second reaction unit 1400 is controlled by an external air tank and a chimney, which will be described later. The external air tank supplies external air and the chimney supplies combustion gas to the second reaction unit 1400. The external air tank and the chimney mix 70 to 80% of combustion gas and 20 to 30% of external air to control the oxygen concentration to equal to or less than 10%. To this end, a plurality of sensors are installed in the second reaction unit 1400 and continuously sense the oxygen concentration. When the oxygen concentration exceeds 15%, the mixing ratio of the combustion gas may be increased, and when the oxygen concentration is less than 7%, the mixing ratio of the external air may be increased to control the oxygen concentration.

As a result of the secondary pyrolysis, high purity carbon fibers and glass fibers remain.

In step S1700, a resultant material of the secondary pyrolysis process is separated (S1700). The resultant material of the secondary pyrolysis may be separated into r-CF (recycled carbon fibers) and r-GF (recycled glass fibers). The r-CF and the r-GF may be separated using density difference.

The separated carbon fibers and glass fibers may be moved to a first chamber 1520 and a second chamber 1530, respectively. The separation of the carbon fibers and the glass fibers may be performed on a conveyor.

According to the present disclosure, all and every operation and steps of the method may be performed automatically without a human intervention. In other words, from the first step S1100 for cutting the waste blades to the last step S1700 for separating and collecting the recycled carbon fibers and the recycled glass fibers, all the operations and steps may be performed automatically without any human intervention in a single process.

While the disclosure has been illustrated and described with reference to exemplary embodiments thereof, it will be understood by those of ordinary skill in the art that various changes in form and details may be made therein without departing from the scope of the disclosure as defined by the appended claims. Also, it is noted that any one feature of an embodiment of the present disclosure described in the specification may be applied to another embodiment of the present disclosure. Similarly, the present invention encompasses any embodiment that combines features of one embodiment and features of another embodiment. Therefore, the scope of the disclosure is defined not by the detailed description of the disclosure but by the appended claims, and all differences within the scope will be construed as being included in the disclosure.

## Claims

1. An apparatus (1000) for recovering carbon fibers and glass fibers from waste blades, the apparatus (1000) comprising:
a preprocessing unit (1200) including a shredding module (1210) for shredding the waste blades and a rolling module (1220) for rolling the shredded waste blades to produce preprocessed shredded waste blades;
a first reaction unit (1300) configured to subject the preprocessed shredded waste blades to primary pyrolysis;
a second reaction unit (1400) configured to subject the waste blades that have been subjected to the primary pyrolysis to secondary pyrolysis; and
a separation unit (1500) including a separation portion (1510) configured to separate the resultant material of the secondary pyrolysis into a first material and a second material, a first chamber (1520) for containing the first material, and a second chamber (1530) for containing the second material.

2. The apparatus (1000) of claim 1, further comprising:
a cutting unit (1100) configured to cut the waste blades to a predetermined length before the waste blades are provided to the preprocessing unit (1200).

3. The apparatus (1000) of claim 1 or 2, further comprising:
a plurality of conveyors including a first conveyor and a second conveyor,
wherein the first conveyor is configured to transfer the preprocessed shredded waste blades from the preprocessing unit (1200) to the first reaction unit (1300), and
wherein the second conveyor is configured to transfer the resultant material of the secondary pyrolysis from the second reaction unit (1400) to the separation unit (1500).

4. The apparatus (1000) of any claim among claim 1 to 3, wherein the preprocessing unit (1200) includes a screening module (1230) between the shredding module (1210) and the rolling module (1220).

5. The apparatus (1000) of any claim among claim 1 to 4, wherein an input portion of the rolling module (1220) includes a first input portion and a second input portion,
wherein nitrogen is supplied when the second input portion is opened.

6. The apparatus (1000) of any claim among claim 1 to 5, wherein gas exhausted from an inside of the rolling module (1220) is recirculated into the rolling module (1220).

7. The apparatus (1000) of any claim among claim 1 to 6, further comprising:
a temperature control unit (1600) configured to control a temperature inside at least one of the preprocessing unit (1200), the first reaction unit (1300) and the second reaction unit (1400).

8. The apparatus (1000) according to claim 7, wherein a temperature inside the first reaction unit (1300) is controlled by the temperature control unit (1600) to be 400°C to 500°C.

9. The apparatus (1000) of any claim among claim 1 to 8, wherein an oil vapor generated in the first reaction unit (1300) is controlled by the temperature control unit (1600) to be cooled and extracted as oil.

10. The apparatus (1000) of any claim among claim 1 to 9, wherein the second reaction unit (1400) includes a sensor measuring an oxygen concentration in the second reaction unit (1400), and an external air tank supplying external air to the second reaction unit (1400).

11. A method for recovering carbon fibers and glass fibers from waste blades, performed by an automatic system, the method comprising:
a shredding step of shredding the waste blades cut in a lengthwise direction;
an inputting step of continuously inputting the shredded waste blades into a rolling module 1220;
a rolling step of rolling the shredded waste blades in the rolling module;
a primary pyrolysis step of subjecting the rolled shredded waste blades to primary pyrolysis;
a secondary pyrolysis step of subjecting the shredded blades that have been subjected to the primary pyrolysis to secondary pyrolysis; and
separating a resultant material of the second pyrolysis step.

12. The method of claim 11, further comprising:
screening the shredded waste blades after the shredding step of shredding the waste blades.

13. The method of claim 11 or 12, wherein an input portion of the rolling module (1220) includes a first input portion and a second input portion,
wherein in the inputting step of continuously inputting the shredded waste blades into the rolling module (1220),
the first input portion and the second input portion are opened sequentially.

14. The method of any claim among claim 11 to 13, wherein in the rolling step of rolling the shredded waste blades, exhaust gas exhausted from the rolling module (1220) is recirculated into the rolling module (1220).

15. The method of any claim among claim 11 to 14, wherein a temperature in the first pyrolysis step is controlled to be 400°C to 500°C.
